# EUROPEAN PATENT SPECIFICATION

(11) **EP 1 678 259 B1**
(45) Date of publication and mention of the grant of the patent: **17.08.2016**
(21) Application number: 04790444.6
(22) Date of filing: 15.10.2004
(51) Int. Cl.: C09B 31/043, C09B 29/08

(54) **DISPERSE AZO DYESTUFFS**
AZODISPERSIONSFARBSTOFFE
COLORANTS AZO DISPERSES

(30) Priority: 21.10.2003 GB 0324584
(43) Date of publication of application: 12.07.2006
(73) Proprietor: DyStar Colours Distribution GmbH, 65479 Raunheim (DE)
(72) Inventor: HALL, Nigel, Bury, Lancs., BL8 4DH (GB)
(86) International application number: PCT/EP2004/011590
(87) International publication number: WO 2005/040283

(56) References cited:
- WO-A-99/50357
- DE-A1- 2 130 992
- DE-A1- 2 811 167
- FR-A- 1 531 147
- GB-A- 909 843
- GB-A- 1 351 381
- GB-A- 1 457 532
- GB-A- 2 104 088
- GB-A- 2 335 924
- DATABASE WPI Section Ch, Week 198108 Derwent Publications Ltd., London, GB; Class A23, AN 1981-12791D XP002325365 -& JP 55 161857 A (NIPPON KAYAKU KK) 16 December 1980 (1980-12-16) cited in the application

## Description

The present invention relates to the field of disperse dyes.

Disperse dyestuffs containing cyanomethyl ester groups are known from literature and are described for example in GB 909,843, DE-A 2130992, DE 2 811 167, GB 1,457,532, GB 1,536,429, FR-A 1,531,147, US 3,776,898, JP 55161857, GB 1 351 381, GB 2,104,088, GB 2 335 924, EP 0 685 531 A1, WO 95/20014 and WO 99/50357.

The inventor of the present invention has surprisingly found that dyeings on polyester with very good wet fastness properties can be obtained if selected dyestuffs containing one cyanomethylester group as defined below are used.

The present invention claims dyestuffs of the formula (Ia), (Ib), (Ic), (Id), (Ie) or (If) 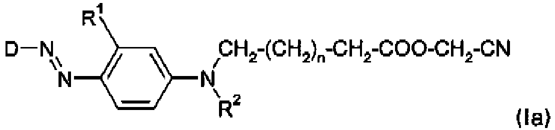 wherein
D is a group of the formula (IIa) 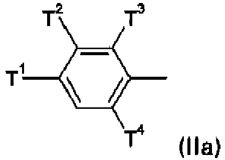 wherein
   T¹, T² and T³ are, independently, hydrogen, halogen or nitro;
   T⁴ is hydrogen, halogen, cyano or nitro;
   wherein at least one of T¹, T², T³ and T⁴ is not hydrogen; or a group of the formula (IIb) 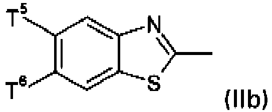 wherein
   T⁵ is hydrogen or halogen; and
   T⁶ is hydrogen -SO₂CH₃, -SCN or nitro;
   wherein at least one of T⁵ and T⁶ is not hydrogen; or a group of the formula (IIc) 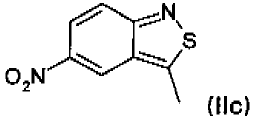 or a group of the formula (IId) 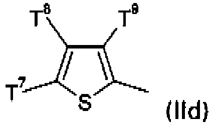 wherein
   T⁷ is nitro, -CHO or a group of the formula 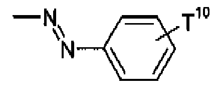
      wherein T¹⁰ is -H, halogen, nitro and cyano;
      T⁸ is hydrogen or halogen; and
      T⁹ is nitro, cyano, -COCH₃ or -COOT¹⁰, wherein **T¹⁰** is (C₁-C₄)-alkyl; or a group of the formula (IIe) 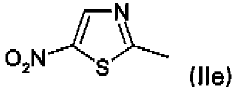
R¹ is (C₁-C₄)-alkyl,
R² is unsubstituted (C₁-C₆)-alkyl, benzyl or phenylethyl; and
n is 0, 1 or 2;
   or 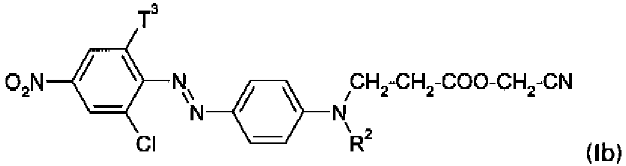 wherein
   T³ is bromo or chloro; and
   R² is unsubstituted (C₁-C₆)-alkyl, substituted (C₁-C₆)-alkyl, benzyl or phenylethyl;
      or 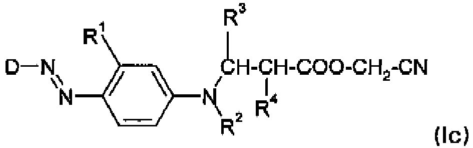 wherein
      D is a group of the formulae (IIa), (IIb), (IIc), (IId) or (IIe) as herinabove defined;
      R¹ is hydrogen, (C₁-C₄)-alkyl or -NCOR⁶, where R⁶ is (C₁-C₄)-alkyl or phenyl;
      R² is as hereinabove defined; and
      R³ is hydrogen and R⁴ is methyl or R³ is methyl and R⁴ is hydrogen
         or 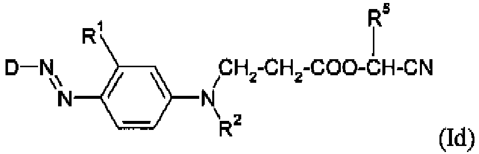
      wherein
      D is a group of the formulae (IIa), (IIb), (IIc), (lid) or (IIe) as herein above defined;
      R¹ is as hereinabove defined;
      R² is as hereinabove defined; and
      R⁵ is methyl or phenyl;
         or 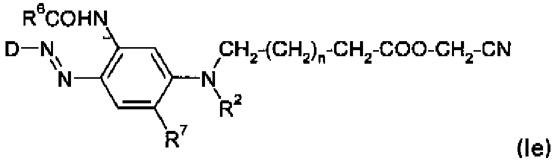
      wherein
      D is a group of the formulae (IIa), (IIb), (IIc), (lid) or (IIe) as hereinabove defined;
      R² is as defined above;
      R⁶ is (C₁-C₄)-alkyl or phenyl;
      R⁷ is chloro, methoxy or ethoxy; and
      n is 0, 1 or 2
         or 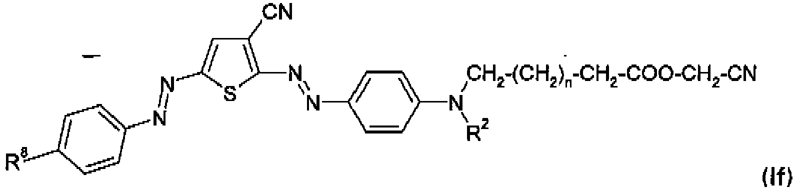
      wherein
      R² is as herein above defined;
      R⁸ is nitro; and
      n is 0, 1 or 2
      with the proviso that
      R² is unsubstituted (C₁-C₆)-alkyl if R¹ is methyl and n = 0.

Alkyl groups standing for R¹, R⁶ or T¹⁰ may be straight-chain or branched and are preferably methyl, ethyl, n-propyl, i-propyl or n-butyl. The same applies to alkyl groups standing for R², which can in addition be pentyl or hexyl. Substituted alkyl groups standing for R² are preferably substituted by hydroxyl, (C₁-C₄)-alkoxy or halogen.
Halogen standing for T¹, T², T³, T⁴, T⁵ or T⁸ are preferably chlorine or bromine.

Preferred examples for D derive from the following amines:
2-nitroaniline, 3-nitroaniline, 4-nitroaniline, 2-chloro-4-nitroaniline, 4-chloro-2-nitroaniline, 2-bromo-4-nitroaniline, 2,6-dichloro-4-nitroaniline, 2,6-dibromo-4-nitroaniline, 2-chloro-6-bromo-4-nitroaniline, 2,5-dichloro-4-nitroaniline, 2-cyano-4-nitroaniline, 2-cyano-6-bromo-4-nitroaniline, 2-cyano-6-chloro-4-nitroaniline, 2,4-dinitroaniline, 2-chloro-4,6-dinitroaniline, 2-bromo-4,6-dinitroaniline, 2,6-dicyano-4-nitroaniline, 2-cyano-4,6-dinitroaniline, 2-amino-5-nitrothiazole, 2-amino-3,5-dinitrothiophene, 2-amino-3-ethoxycarbonyl-5-nitrothiophene, 2-amino-3-acetyl-5-nitrothiophene, 2-amino-3-cyano-5-nitrothiophene, 2-amino-3-cyano-4-chloro-5-formylthiophene, 7-amino-5-nitrobenzoisothiazole, 2-amino-6-nitrobenzothiazole, 2-amino-6-methylsulphonylbenzothiazole; 2-amino-6-thiocyanatobenzothiazole, 2-amino-5,6-dichlorobenzothiazole and 2-amino-6,7-dichlorobenzothiazole (mixture).

In especially preferred dyestuffs of formula (Ia) R¹ is methyl, R² is ethyl and n is O.

In especially preferred dyestuffs of formula (Ib) R² is ethyl, benzyl or phenethyl.

The compounds of the formula I may be obtained by usual methods for the preparation of azo compounds such as by diazotisation of an amine of the formula III

D-NH₂ (III)

wherein D is defined as given above,
and coupling onto a compound of the formula IV 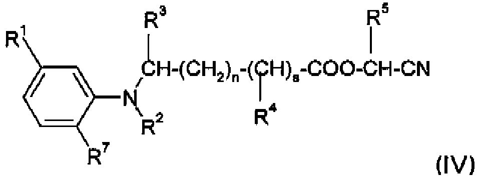 wherein R¹, R², R³, R⁴, R⁵ and R⁷ are defined as given above.

Typically the amine of the formula (III) may be diazotised in an acidic medium, such as acetic, propionic or hydrochloric acid using a nitrosating agent such as nitrosylsulphuric acid, sodium nitrite or methylnitrite at a temperature from - 10°C to 10°C. Coupling onto the compound of the formula (IV) may be achieved by adding the diazotised amine to the compound of the formula (IV) under conditions described in literature and known to the skilled persons.
After coupling the compound of the formula (I) may be recovered from the reaction mixture by any convenient means such as filtration.
The compounds of the formulae (III) and (IV) are known and can be obtained by methods described in literature or known to the skilled person.

The compounds of the formula (I) are useful for dyeing and printing of synthetic textile material particularly polyester textile materials and fibre blends thereof with for example cellulosic materials like cotton, to which they impart colours which have excellent wet fastness properties.

Dyeing of the fibre goods mentioned with the dyestuffs of the formula (I) can be carried out in a manner known per se, preferably from aqueous dispersions, if appropriate in the presence of carriers, at between 80 and 110°C, by the exhaust process or by the HT process in a dyeing autoclave at 110 to 140°C, and by the so-called thermofixing process, in which the goods are padded with the dye liquor and then fixed at about 180 to 230°C.
The fibre goods mentioned can as well be printed in a manner known pers e by a procedure in which the dyestuffs of the formula (I) are incorporated into a printing paste and the goods printed with the paste are treated , if appropriate in the presence of a carrier, with HT steam, pressurized steam or dry heat at temperatures between 180 and 230°C to fix the dyestuff.

The dyestuffs of the formula (I) should be present in the finest possible dispersion in the dye liquors and printing pastes employed in the above applications.
The fine dispersion of the dyestuffs is effected in a manner known per se by a procedure in which the dyestuff obtained during preparation is suspended ina liquid medium, preferably in water, together with dispersing agents and the mixture is exposed to the action of shearing forces, the particles originally present being comminuted mechanically to the extent that an optimum specific surface area is achieved and sedimentation of the dyestuff is as low as possible. The particle size of the dyestuffs is in general between 0.5 and 5 µm, preferably about 1 µm.
The dispersing agents used can be nonionic or anionic. Nononic dispersing agents are, for example, reaction products of alkylene oxides, such as, for example, ethylene oxide or propylene oxide, with alkylatable compounds, such as for example fatty alcohols, fatty amines, fatty acids, phenols, alkylphenols and carboxylic acid amines. Anionic dispersing agnets are, for example, ligninsulphonates, alkyl- or alkylarylsulphonates or alkylaryl polyglycol ethersulphates. For most methods of use, the dyestuff formulations thus obtained should be pourable. The dyestuff and dispersing agent content is therefore limited in these cases. In general, the dispersions are brought to a dyestuff content of up to 60 per cent by weight and a dispersing agent content of up to 25 per cent by weight. For economic reasons, the dyestuff contents usually do not fall below 15 per cent by weight.
The dispersions can also comprise other auxiliaries, for example those which act as oxidizing agents or fungicidal agents. Such agents are well known in the art. The dyestuff dispersion thus obtained can be used very advantageously for the preparation of printing pastes and dye liquors.
For certain fields of use, powder formulations are preferred. These powders comprise the dyestuff, dispersing agents and other auxiliaries, such as, for example, wetting agents, oxidizing agents, preservatives and dust removal agents.
A preferred preparation process for pulverulent dyestuff formulations comprises removing the liquid from the liquid dyestuff dispersions described above, for example by vacuum drying, freeze drying, by drying on roller dryers, but preferably by spray drying.

### Example 1

### 4-(4-nitrophenylazo)-3-methyl-N-ethyl-N-(2-cyanomethoxy-carbonylethyl) aniline

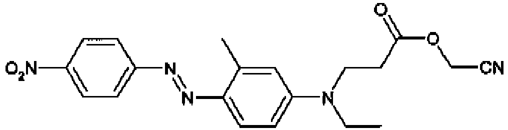

4-nitroaniline (4.1 parts) was set stirring at 6°C with a mixture of acetic acid and propionic acid, 86:14 (50parts). Nitrosyl sulphuric acid 40% (11.4parts) was added below 5°C and the mixture was stirred for 30 minutes.
The diazo solution obtained was added gradually to a stirred coupling mixture of N-ethyl, N-(2-cyanomethoxycarbonylethyl)-m-toluidine (7.3parts), methanol (50parts), water (200parts) and sulphamic acid (1 part). After two hours the product was isolated by filtration, washed with cold water and dried to yield, 4-(4-nitrophenylazo)-3-methyl-N-ethyl-N-(2-cyanomethoxycarbonylethyl) aniline (6.5parts) λmax = 486nm (acetone)
When applied to polyester materials from aqueous dispersion, red shades with excellent wet and light fastness properties were seen.

The following examples of dyes of formula (Iaa): 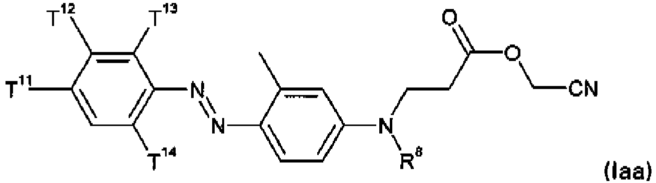 were prepared by the procedure of Example 1 (see Table 1)

**Table 1**

| Example | T¹¹ | T¹² | T¹³ | T¹⁴ | R⁸ | λmax (nm) |
|---|---|---|---|---|---|---|
| 2 | -H | -H | -NO₂ | -H | -C₂H₅ | 479 |
| 3 | -H | -NO₂ | -H | -H | -C₂H₅ | 468 |
| 4 | -NO₂ | -H | -Cl | -H | -C₂H₅ | 508 |
| 5 | -Cl | -H | -NO₂ | -H | -C₂H₅ | 501 |
| 6 | -NO₂ | -H | -Br | -H | -C₂H₅ | 507 |
| 7 | -NO₂ | -H | -Cl | -Cl | -C₂H₅ | 450 |
| 8 | -NO₂ | - -H | -Br | -Br | -C₂H₅ | 449 |
| 9 | -NO₂ | -H | -Cl | -Br | -C₂H₅ | 449 |
| 10 | -NO₂ | -Cl | -H | -Cl | -C₂H₅ | 518 |
| 11 | -NO₂ | -H | -CN | -H | -C₂H₅ | 534 |
| 12 | -NO₂ | -H | -CN | -Br | -C₂H₅ | 544 |
| 13 | -NO₂ | -H | -CN | -Cl | -C₂H₅ | 546 |
| 14 | -NO₂ | -H | -NO₂ | -H | -C₂H₅ | 535 |
| 15 | -NO₂ | -H | -Br | -NO₂ | -C₂H₅ | 542 |
| 16 | -NO₂ | -H | -Cl | -NO₂ | -C₂H₅ | 544 |
| 17 | -NO₂ | -H | -CN | -CN | -C₂H₅ | 582 |
| 18 | -NO₂ | -H | -CN | -NO₂ | -C₂H₅ | 590 |
| 19 | -NO₂ | -H | -H | -H | -C₄H₉ | 490 |
| 20 | -NO₂ | -H | -Cl | -H | -C₄H₉ | 513 |
| 21 | -NO₂ | -H | -Cl | -Cl | -C₄H₉ | 453 |
| 22 | -NO₂ | -H | -Cl | -Br | -C₄H₉ | 453 |
| 23 | -NO₂ | -H | -Br | -Br | -C₄H₉ | 452 |
| 24 | -NO₂ | -H | -CN | -H | -C₄H₉ | 539 |
| 25 | -NO₂ | -H | -NO₂ | -H | -C₄H₉ | 540 |
| 26 | -NO₂ | -H | -CN | -Br | -C₄H₉ | 549 |
| 27 | -NO₂ | -H | -CN | -Cl | -C₄H₉ | 548 |
| 28 | -NO₂ | -H | -Br | -NO₂ | -C₄H₉ | 548 |
| 29 | -NO₂ | -H | -Cl | -NO₂ | -C₄H₉ | 549 |
| 30 | -H | -H | -NO₂ | -H | -C₄H₉ | 483 |
| 31 | -NO₂ | -H | -CN | -CN | -C₄H₉ | 586 |
| 32 | -NO₂ | -H | -H | -H | -CH₂[C₆H₅] | 479 |
| 33 | -NO₂ | -H | -NO₂ | -H | -CH₂[C₆H₅] | 530 |
| 34 | -H | -H | -NO₂ | -H | -CH₂[C₆H₅] | 470 |
| 35 | -H | -NO₂ | -H | -H | -CH₂[C₆H₅] | 460 |
| 36 | -NO₂ | -H | -Cl | -H | -CH₂[C₆H₅] | 498 |
| 37 | -NO₂ | -H | -Cl | -Cl | -CH₂[C₆H₅] | 446 |
| 38 | -NO₂ | -H | -Br | -Br | -CH₂[C₆H₅] | 445 |
| 39 | -NO₂ | -H | -Br | -Cl | -CH₂[C₆H₅] | 444 |
| 40 | -NO₂ | -H | -CN | -H | -CH₂[C₆H₅] | 528 |
| 41 | -NO₂ | -H | -CN | -Br | -CH₂[C₆H₅] | 539 |
| 42 | -NO₂ | -H | -CN | -Cl | -CH₂[C₆H₅] | 539 |
| 43 | -NO₂ | -H | -Br | -NO₂ | -CH₂[C₆H₅] | 538 |
| 44 | -NO₂ | -H | -Cl | -NO₂ | -CH₂[C₆H₅] | 537 |
| 45 | -NO₂ | -H | -CN | -NO₂ | -CH₂[C₆H₅] | 580 |
| 46 | -NO₂ | -H | -CN | -CN | -CH₂[C₆H₅] | 577 |
| 47 | -NO₂ | -H | -H | -H | -C₃H₇ | 487 |
| 48 | -NO₂ | -H | -Cl | -H | -C₃H₇ | 509 |
| 49 | -NO₂ | -H | -Cl | -Cl | -C₃H₇ | 452 |
| 50 | -NO₂ | -H | -Cl | -Br | -C₃H₇ | 451 |
| 51 | -NO₂ | -H | -Br | -Br | -C₃H₇ | 452 |
| 52 | -NO₂ | -H | -CN | -H | -C₃H₇ | 536 |
| 53 | -NO₂ | -H | -NO₂ | -H | -C₃H₇ | 537 |
| 54 | -NO₂ | -H | -CN | -Br | -C₃H₇ | 546 |
| 55 | -NO₂ | -H | -CN | -Cl | -C₃H₇ | 548 |
| 56 | -NO₂ | -H | -Br | -NO₂ | -C₃H₇ | 544 |
| 57 | -NO₂ | -H | -Cl | -NO₂ | -C₃H₇ | 545 |
| 58 | -H | -H | -NO₂ | -H | -C₃H₇ | 480 |
| 59 | -NO₂ | -H | -CN | -CN | -C₃H₇ | 584 |
| 60 | -NO₂ | -H | -Cl | -H | -CH₃ | 504 |
| 61 | -NO₂ | -H | -CN | -H | -CH₃ | 529 |
| 62 | -NO₂ | -H | -Cl | -CN | -CH₃ | 543 |
| 63 | -NO₂ | -H | -Br | -CN | -CH₃ | 542 |
| 64 | -NO₂ | -H | -Br | -NO₂ | -CH₃ | 539 |

### Example 66

### 4-(2,6-dichloro-4-nitrophenylazo)-N-ethyl-N-(2-cyanomethoxy- carbonylethyl) aniline

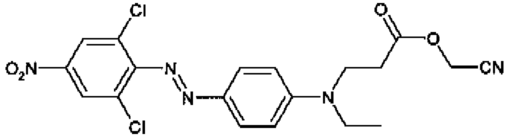

2,6-dichloro-4-nitroaniline (6.2parts) was set stirring at 5°C with a mixture of acetic acid and propionic acid, 86:14 (40parts). Nitrosyl sulphuric acid 40% (11.4parts) was added below 5°C and the mixture was stirred for 30 minutes. The diazo solution was added gradually to a stirred coupling mixture of N-ethyl, N-2(cyanomethoxycarbonylethyl)-aniline (8.3parts), methanol (50parts), water (300parts) and sulphamic acid (1part). After one hour the product was isolated by filtration, washed with cold water and dried to yield, 4-(2,6-dichloro-4-nitrophenylazo)-N-ethyl-N-(2-cyanomethoxycarbonylethyl) aniline (9.5parts) λmax = 432nm (acetone)
When applied to polyester materials from aqueous dispersion, yellow brown shades with excellent wet and light fastness properties were seen.

The following examples of dyes of Formula (Iba) 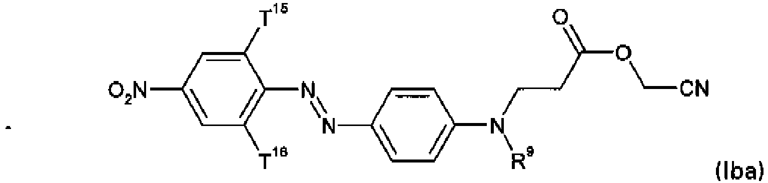 were prepared by the procedure of Example 65 (see Table 2)

**Table 2**

| Example | T¹⁵ | T¹⁶ | R⁹ | λmax (nm) |
|---|---|---|---|---|
| 66 | -Cl | -Cl | -C₃H₇ | 433 |
| 67 | -Cl | -Cl | -C₄H₉ | 434 |
| 68 | -Cl | -Cl | -CH₂[C₆H₅] | 420 |
| 69 | -Cl | -Cl | -CH₃ | 425 |
| 70 | -Cl | -Br | -C₂H₅ | 430 |
| 71 | -Cl | -Br | -C₃H₇ | 431 |
| 72 | -Cl | -Br | -C₄H₉ | 433 |
| 73 | -Cl | -Br | -CH₂[C₆H₅] | 420 |
| 74 | -Cl | -Br | -CH₃ | 424 |
| 75 | -Br | -Br | -C₂H₅ | 430 |
| 76 | -Br | -Br | -C₃H₇ | 432 |
| 77 | -Br | -Br | -C₄H₉ | 431 |
| 78 | -Br | -Br | -CH₂[C₆H₅] | 421 |
| 79 | -Br | -Br | -CH₃ | 424 |

### Example 80

### 4-(6-nitrobenzothiazol-yl-azo)-3-methyl-N-ethyl-N-(2-cyanomethoxycarbonylethyl) aniline

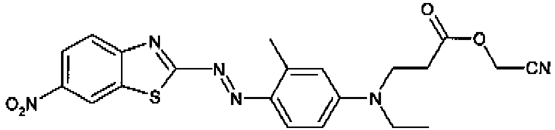

2-amino-6-nitrobenzothiazole (3.9parts) was set stirring at 5°C with a mixture of acetic acid and propionic acid, 86:14 (40parts). Nitrosyl sulphuric acid 40% (7.6parts) was added below 5°C and the mixture was stirred for 1 hour.
The diazo solution was added gradually to a stirred coupling mixture of N-ethyl, N-(2-cyanomethoxycarbonylethyl)-m-toluidine (5.9parts), methanol (25parts), water (200parts) and sulphamic acid (0.5parts). After one hour the product was isolated by fiiltration, washed with cold water and dried to yield, 4-(6-nitrobenzothiazol-yl-azo)-3-methyl-N-ethyl-N-(2-cyanomethoxycarbonyl ethyl) aniline (2.4parts) λmax = 545nm (acetone)
When applied to polyester materials from aqueous dispersion, rubine shades with excellent wet and light fastness properties were seen.

The following examples of dyes of Formula (lab): 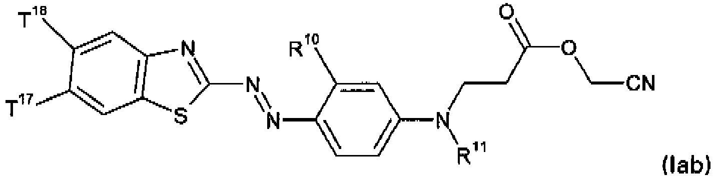 were prepared by the procedure of Example 80 (see Table 3)

**Table 3**

| Example | T¹⁷ | T¹⁸ | R¹⁰ | R¹¹ | λmax nm |
|---|---|---|---|---|---|
| 81 | -SO₂CH₃ | -H | -CH₃ | -CH₃ | 527 |
| 82 | -NO₂ | -H | -CH₃ | -CH₃ | 543 |
| 83 | -NO₂ | -H | -CH₃ | -C₃H₇ | 545 |
| 84 | -NO₂ | -H | -CH₃ | -C₄H₉ | 548 |
| 85 | -NO₂ | -H | -CH₃ | -CH₂[C₆H₅] | 538 |
| 86 | -SO₂CH₃ | -H | -CH₃ | -C₃H₇ | 531 |
| 87 | -SO₂CH₃ | -H | -CH₃ | -C₄H₉ | 533 |
| 88 | -SO₂CH₃ | -H | -CH₃ | -CH₂[C₆H₅] | 525 |
| 89 | -SCN | -H | -CH₃ | -C₂H₅ | 534 |
| 90 | -SCN | -H | -CH₃ | -CH₃ | 530 |
| 91 | -SCN | -H | -CH₃ | -C₃H₇ | 535 |
| 92 | -SCN | -H | -CH₃ | -C₄H₉ | 537 |
| 93 | -SCN | -H | -CH₃ | -CH₂[C₆H₅] | 529 |
| 94 | -NO₂ | -H | -H | -C₄H₉ | 535 |
| 95 | -NO₂ | -H | -H | -CH₂[C₆H₅] | 525 |
| 96 | -SCN | -H | -H | -C₄H₉ | 523 |
| 97 | -SCN | -H | -H | -CH₂[C₆H₅] | 516 |
| 98 | -SO₂CH₃ | -H | -H | -C₄H₉ | 521 |
| 99 | -SO₂CH₃ | -H | -H | -CH₂[C₆H₅] | 512 |

### Example 100

### 4-(3,5-dinitrothiophen-yl-azo)-3-methyl-N-ethyl-N-(2-cyanomethoxycarbonylethyl) aniline

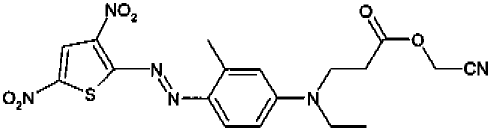

2-amino-3,5-dinitrothiophene (3.1 parts) was set stirring at 5°C with a mixture of acetic acid and propionic acid, 86:14 (50parts). Nitrosyl sulphuric acid 40% (5.7parts) was added below 5°C and the mixture was stirred for 30 mins. The diazo solution was added gradually to a stirred coupling mixture of N-ethyl, N-(2-cyanomethoxycarbonyethyl)-m-toluidine (4.0parts), acetone (50parts), water (300parts) and sulphamic acid (0.5parts). After one hour the product was isolated by filtration, washed with cold water and dried to yield, 4-(3,5-dinitrothiaphen-yl-azo)-3-methyl-N-ethyl-N-(2-cyanomethoxycarbonyl- ethyl) aniline (3.0parts) λmax = 640nm (acetone)
When applied to polyester materials from aqueous dispersion, blue shades with excellent wet and light fastness properties were seen.

The following examples of dyes of Formula (Iac): 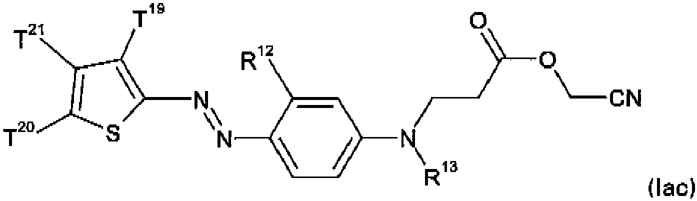 were prepared by the procedure of Example 100 (see Table 4)

**Table 4**

| Example | T¹⁹ | T²⁰ | T²¹ | R¹² | R¹³ | λmax (nm) |
|---|---|---|---|---|---|---|
| 101 | -NO₂ | -NO₂ | -H | -H | -C₂H₅ | 620 |
| 102 | -NO₂ | -NO₂ | -H | -H | -C₄H₉ | 625 |
| 103 | -NO₂ | -NO₂ | -H | -H | -C₃H₇ | 622 |
| 104 | -NO₂ | -NO₂ | -H | -H | -CH₂[C₆H₅] | 611 |
| 105 | -NO₂ | -NO₂ | -H | -CH₃ | -C₄H₉ | 645 |
| 106 | -NO₂ | -NO₂ | -H | -CH₃ | -C₃H₇ | 640 |
| 107 | -NO₂ | -NO₂ | -H | -CH₃ | -CH₂[C₆H₅] | 632 |
| 108 | -COOC₂H₅ | -NO₂ | -H | -CH₃ | -C₂H₅ | 595 |
| 109 | -COOC₂H₆ | -NO₂ | -H | -H | -C₄H₉ | 583 |
| 110 | -COCH₃ | -NO₂ | -H | -CH₃ | -C₂H₅ | 599 |
| 111 | -COCH₃ | -NO₂ | -H | -CH₃ | -C₄H₉ | 603 |
| 112 | -COCH₃ | -NO₂ | -H | -H | -C₄H₉ | 585 |
| 113 | -CN | -NO₂ | -H | -CH₃ | -C₂H₅ | 604 |
| 114 | -CN | -NO₂ | -H | -CH₃ | -CH₂[C₆H₅] | 595 |
| 115 | -CN | -CHO | -Cl | -CH₃ | -C₂H₅ | 585 |
| 116 | -CN | -CHO | -Cl | -CH₃ | -C₄H₉ | 591 |
| 117 | -CN | -CHO | -Cl | -H | -C₄H₉ | 679 |
| 118 | -COOC₂H₅ | -NO₂ | -H | -H | -CH₂[C₆H₅] | 565 |
| 119 | -COOC₂H₅ | -NO₂ | -H | -CH₃ | -C₄H₉ | 601 |

Example 120

### 4-(5-nitrobenzisothiazol-yl-azo)-3-methyl-N-ethyl-N-(2-cyanomethoxycarbonylethyl) aniline

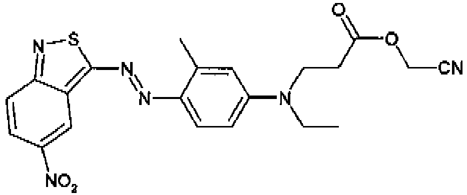

7-amino-5-nitrobenzoisothiazole (2.9parts) was added to a mixture of sulphuric acid 98% (15parts) and phosphoric acid (4parts) stirring at room temperature. The mixture was heated to 55°C and was stirred at that temperature for 30mins. Nitrosyl sulphuric acid 40% (6.1 parts) was added below 5°C and the mixture was stirred for 2hrs.

The diazo solution was added gradually to a stirred coupling mixture of N-ethyl, N-(2-cyanomethoxycarbonylethyl)-m-toluidine (4.8parts), acetone (50parts), water (100parts) and sulphamic acid (0.5parts). Sodium acetate was added to increase the pH to 4.0 and the mixture was stirred for 1 hour. The product was isolated by filtration, washed with cold water and dried to yield, 4-(5-nitrobenzisothiazol-yl-azo)-3-methyl-N-ethyl-N-(2-cyanomethoxycarbonylethyl) aniline (2.4parts) λmax = 601 nm (acetone)

When applied to polyester materials from aqueous dispersion, blue shades with excellent wet and light fastness properties were seen.

The following examples of dyes of Formula (lad) 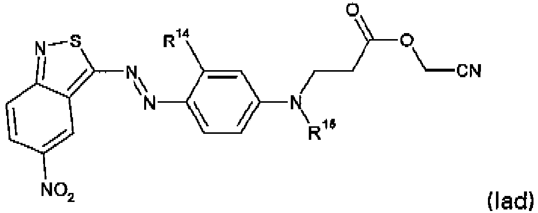 were prepared by the procedure of Example 120 (see Table 5)

**Table 5**

| Example | R¹⁴ | R¹⁵ | λmax (nm) |
|---|---|---|---|
| 121 | -H | -C₂H₅ | 588 |
| 122 | -H | -CH₂[C₆H₅] | 578 |
| 123 | -H | -C₄H₉ | 589 |
| 124 | -CH₃ | -C₃H₇ | 603 |
| 125 | -CH₃ | -CH₂[C₆H₅] | 593 |
| 126 | -CH₃ | -C₄H₉ | 608 |

### Example 127

### 4-(5-nitrothiazol-yl-azo)-N-butyl-N-(2-cyanomethoxy- carbonylethyl) aniline

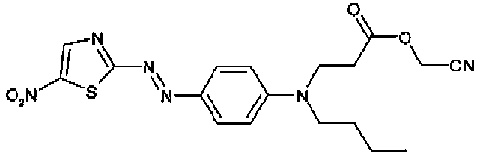

2-amino-5-nitrothiazole (2.9parts) was was set stirring at 5°C with a mixture of acetic acid and propionic acid, 86:14 (50parts). Nitrosyl sulphuric acid 40% (7.0parts) was added below 5°C and the mixture was stirred for 30 mins.
The diazo solution was added gradually to a stirred coupling mixture of N-butyl, N-2(cyanomethoxycarbonylethyl)-aniline (5.2parts, acetone (50parts), water (200parts) and sulphamic acid (0.5parts). After one hour the product was isolated by filtration, washed with cold water and dried to yield, 4-(5-nitrothiazol-yl-azo)-N-butyl-N-(2-cyanomethoxycarbonylethyl) aniline (2.9pars) λmax = 571nm (acetone)
When applied to polyester materials from aqueous dispersion, blue shades with excellent wet and light fastness properties were seen.

The following examples of dyes of Formula (lae) 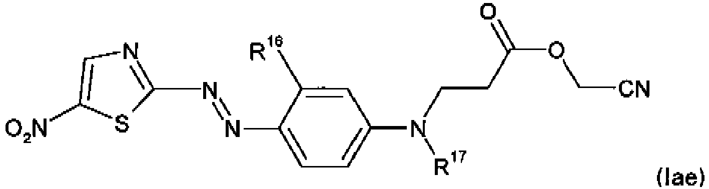 were prepared by the procedure of Example 127 (see Table 6)

**Table 6**

| Example | R¹⁶ | R¹⁷ | λmax (nm) |
|---|---|---|---|
| 128 | -CH₃ | -C₂H₅ | 575 |
| 129 | -CH₃ | -C₄H₉ | 582 |
| 130 | -CH₃ | -CH₂[C₆H₅] | 669 |

### Example 131

### 4-(2-chloro-4-nitrophenylazo)-3-acetylamino-N-ethyl-N-(2-cyanomethoxycarbonylethyl)-aniline

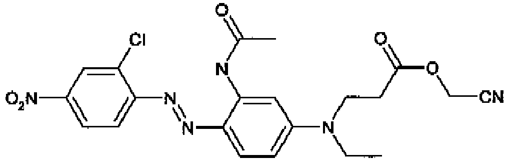

2-chloro-4-nitroaniline (3.5parts) was set stirring at 5°C with a mixture of acetic acid and propionic acid, 86:14 (40parts). Nitrosyl sulphuric acid 40% (7.0parts) was added below 5°C and the mixture was stirred for 30 minutes.
The diazo solution was added gradually to a stirred coupling mixture of 3(N-ethyl, N-cyanomethoxycarbonylethyl)-amino-acetanilide (6.3parts), methanol (40parts), water (200parts) and sulphamic acid (1part). After two hours the product was isolated by filtration, washed with cold water and dried to yield, 4-(2-chloro-4-nitrophenylazo)-3-acetylamino-N-ethyl-N-(2-cyanomethoxy-carbonylethyl)-aniline (4.1 parts) λmax = 525nm (acetone)
When applied to polyester materials from aqueous dispersion, rubine shades with excellent wet and light fastness properties were seen.

The following examples of dyes of formula (lea): 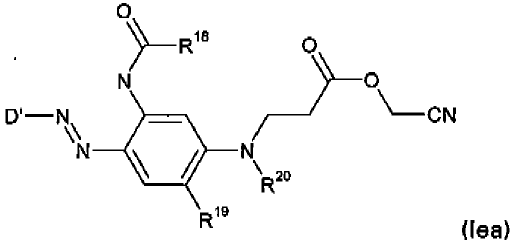 were prepared by the procedure of Example 131 (see Table 7)

**Table 7**

| Example | D' | R¹⁸ | R¹⁹ | R²⁰ | λmax (nm) |
|---|---|---|---|---|---|
| 132 | 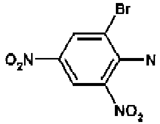 | -CH₃ | -H | -C₂H₅ | 550 |
| 133 | 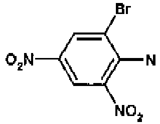 | 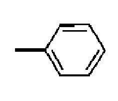 | -H | -C₂H₆ | 553 |
| 134 | 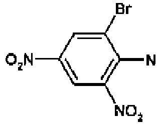 | -CH₃ | -H | -C₄H₉ | 552 |
| 135 | 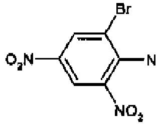 | -C₂H₅ | -H | -C₂H₅ | 550 |
| 136 | 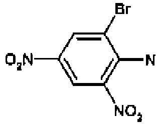 | -CH₃ | -OCH₃ | -C₂H₅ | 596 |
| 137 | 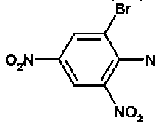 | -CH₃ | -OCH₃ | -C₄H₉ | 603 |
| 138 | 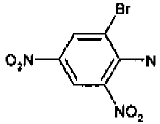 | 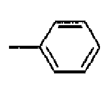 | -OCH₃ | -H | 600 |
| 139 | 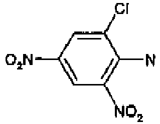 | -C₂H₅ | -OCH₃ | -C₂H₅ | 596 |
| 140 | 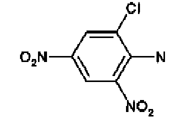 | -CH₃ | -H | -C₄H₉ | 551 |
| 141 | 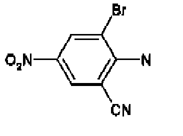 | -CH₃ | -H | -C₂H₅ | 574 |
| 142 | 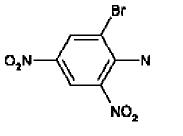 | -C₂H₅ | -H | -C₂H₅ | 550 |
| 143 | 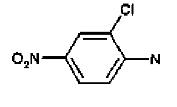 | -CH₃ | -H | -C₄H₉ | 525 |
| 144 | 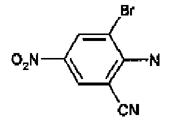 | -CH₃ | -OCH₃ | -C₂H₅ | 628 check |
| 145 | 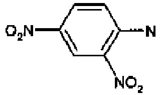 | -CH₃ | -H | -C₂H₅ | 539 |
| 146 | 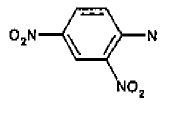 | -CH₃ | -OCH₃ | -C₂H₅ | 574 |
| 147 | 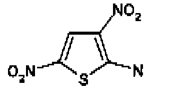 | -CH₃ | -H | -C₂H₅ | 634 |
| 148 | 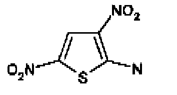 | -CH₃ | -OCH₃ | -C₂H₅ | 660 |

### Example 149

### 4-(2-cyano-4-nitrophenylazo)-3-methyl-N-ethyl-N-(4-cyanomethoxycarbonylbutyl)-aniline

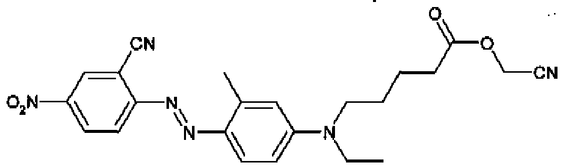

2-cyano-4-nitroaniline (3.2parts) was set stirring at 5°C with a mixture of acetic acid and propionic acid, 86:14 (50parts). Nitrosyl sulphuric acid 40% (7.6parts) was added below 5°C and the mixture was stirred for 30 minutes. The diazo solution was added gradually to a stirred coupling mixture of N-ethyl, N-(4-cyanomethoxycarbonylbutyl)-m-toluidine (6.0parts), methanol (50parts), water (200parts) and sulphamic acid (1part). After two hours the product was isolated by filtration, washed with cold water and dried to yield, 4-(2-cyano-4-nitrophenylazo)-3-methyl-N-ethyl-N-(4-cyanomethoxycarbonyl butyl)-aniline.
(5.3parts) λmax = 548nm (acetone)

When applied to polyester materials from aqueous dispersion, rubine shades with excellent wet and light fastness properties were seen.

The following examples of dyes of Formula (Iaf) 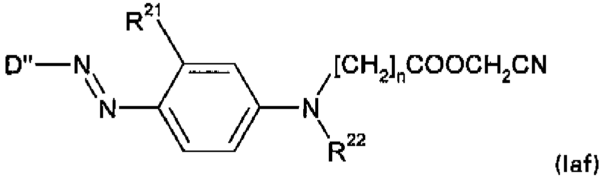 were prepared by the procedure of Example 149 (see Table 8)

**Table 8**

| Example | D" | R²¹ | R²² | n | λmax (nm) |
|---|---|---|---|---|---|
| 150 | 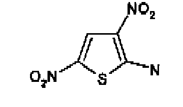 | -CH₃ | -C₂H₅ | 4 | 649 |
| 151 | 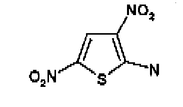 | -CH₃ | -C₂H₆ | 3 | 642 |
| 152 | 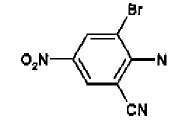 | -CH₃ | -C₂H₅ | 4 | 561 |
| 153 | 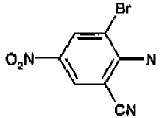 | -CH₃ | -C₂H₅ | 3 | 556 |
| 154 | 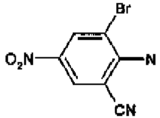 | -CH₃ | -C₃H₇ | 3 | 558 |
| 155 | 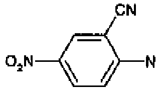 | -CH₃ | -C₂H₅ | 4 | 548 |
| 156 | 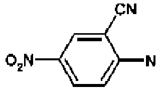 | -CH₃ | -C₂H₅ | 3 | 536 |

### Example 157

### 4-(2-cyano-4-nitrophenylazo)-3-methyl-N-ethyl-N-(2-(1-cyanoethoxy) carbonylethyl)-aniline

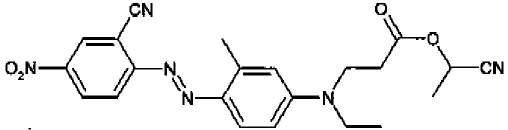

2-cyano-4-nitroaniline (2.1 parts) was set stirring at 5°C with a mixture of acetic acid and propionic acid, 86:14 (40parts). Nitrosyl sulphuric acid 40% (4.9parts) was added below 5°C and the mixture was stirred for 30 minutes.
The diazo solution was added gradually to a stirred coupling mixture of N-ethyl, N-(2-(1-cyanoethoxy)carbonylethyl)-m-toluidine (3.7pars), acetone (50parts), water (300parts) and sulphamic acid (1part). After two hours the product was isolated by filtration, washed with cold water and dried to yield, 4-(2-cyano-4-nitrophenylazo)-3-methyl-N-ethyl-N-(2-(1-cyanoethoxy) carbonylethyl)-aniline (3.5parts) λmax = 534nm (acetone)
When applied to polyester materials from aqueous dispersion, rubine shades with excellent wet and light fastness properties were seen.

The following examples of dyes of Formula (Ida) 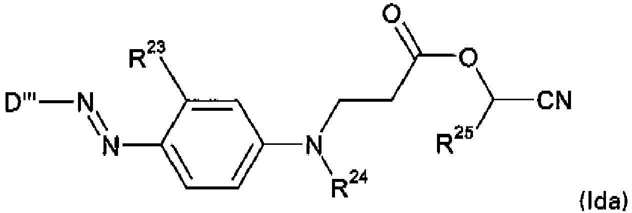 were prepared by the procedure of Example 157 (see Table 9)

**Table 9**

| Example | D''' | R²³ | R²⁴ | R²⁶ | λmax (nm) |
|---|---|---|---|---|---|
| 158 | 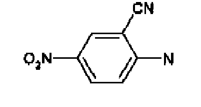 | -CH₃ | -C₂H₅ | 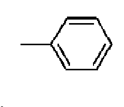 | 533 |
| 159 | 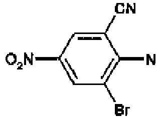 | -CH₃ | -C₂H₅ | 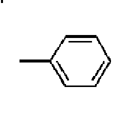 | 544 |
| 160 | 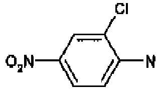 | -CH₃ | -C₂H₅ | 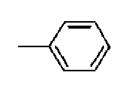 | 507 |
| 161 | 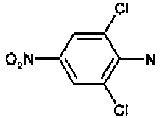 | -CH₃ | -C₂H₅ | 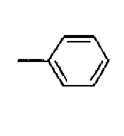 | 446 |
| 162 | 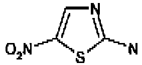 | -CH₃ | -C₂H₅ | 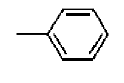 | 580 |
| 163 | 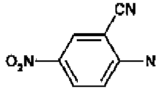 | -H | -C₂H₅ | 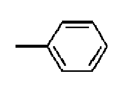 | 523 |
| 164 | 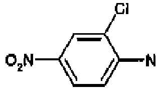 | -H | -C₂H₅ | 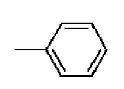 | 494 |
| 165 | 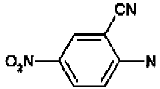 | -H | -C₂H₅ | -CH₃ | 522 |
| 166 | 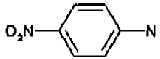 | -H | -C₂H₅ | -CH₃ | 473 |
| 167 | 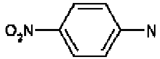 | -H | -C₄H₉ | -CH₃ | 480 |
| 168 | 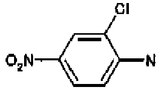 | -H | -C₂H₅ | -CH₃ | 494 |
| 169 | 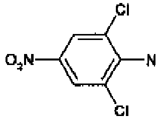 | -H | -C₂H₅ | -CH₃ | 439 |
| 170 | 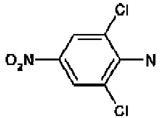 | -H | -C₄H₉ | -CH₈ | 441 |
| 171 | 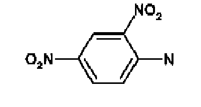 | -H | -C₂H₆ | -CH₃ | 521 |
| 172 | 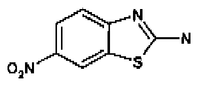 | -H | -C₂H₅ | -CH₃ | 533 |
| 173 | 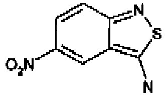 | -H | -C₂H₅ | -CH₃ | 590 |
| 174 | 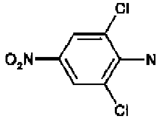 | -CH₃ | -C₂H₅ | -CH₃ | 449 |
| 175 | 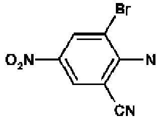 | -CH₃ | -C₂H₅ | -CH₃ | 544 |
| 176 | 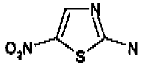 | -CH₃ | -C₂H₅ | -CH₃ | 581 |
| 177 | 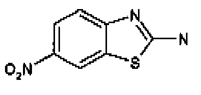 | -CH₃ | -C₂H₅ | -CH₃ | 544 |

| Example | D''' | R²³ | R²⁴ | R²⁵ | λmax (nm) |
|---|---|---|---|---|---|
| 178 | 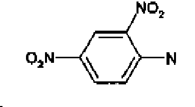 | -CH₃ | -C₂H₅ | -CH₃ | 533 |
| 179 | 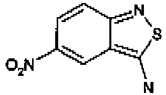 | -CH₃ | -C₂H₅ | -CH₃ | 601 |
| 180 | 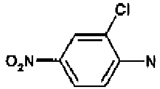 | -CH₃ | -C₂H₅ | -CH₃ | 506 |
| 181 | 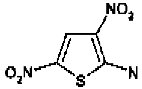 | -H | -C₂H₅ | -CH₃ | 640 |

### Example 182

### 4-(2-chloro-4-nitrophenylazo)-N-ethyl-N-(2-cyanomethoxy carbonylpropyl)-aniline

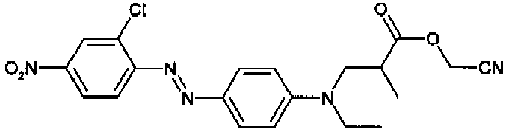

2-chloro-4-nitroaniline (parts) was set stirring at 5°C with a mixture of acetic acid and propionic acid, 86:14 (40parts). Nitrosyl sulphuric acid 40% (4.9parts) was added below 5°C and the mixture was stirred for 30 minutes.
The diazo solution was added gradually to a stirred coupling mixture of N-ethyl, N-2-(cyanomethoxycarbonylpropyl)-aniline (parts), acetone (50parts), water (300parts) and sulphamic acid (1part). After two hours the product was isolated by filtration, washed with cold water and dried to yield, 4-(2-chloro-4-nitrophenylazo)-N-ethyl-N-(2-cyanomethoxycarbonylpropyl)-aniline (3.5pars) λmax = 534nm (acetone)
When applied to polyester materials from aqueous dispersion, red shades with excellent wet and light fastness properties were seen.

The following examples of dyes of Formula (Ica) 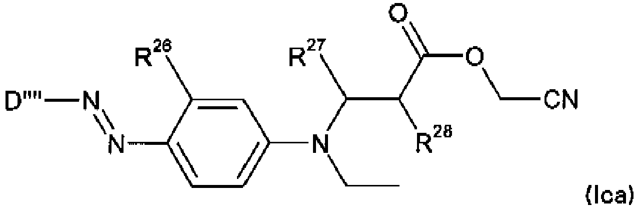 were prepared by the procedure of Example 182 (see Table 10)

**Table10**

| Example | D'''' | R²⁶ | R²⁷ | R²⁸ | λmax (nm) |
|---|---|---|---|---|---|
| 183 | 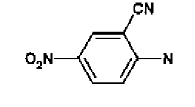 | -H | -H | -CH₃ | 521 |
| 184 | 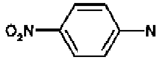 | -H | -H | -CH₃ | 473 |
| 185 | 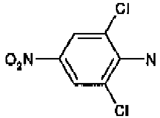 | -H | -H | -CH₃ | 440 |
| 186 | 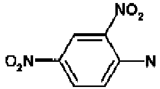 | -H | -H | -CH₃ | 521 |
| 187 | 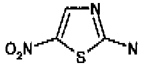 | -H | -H | -CH₃ | 569 |
| 188 | 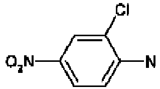 | -CH₃ | -H | -CH₃ | 505 |
| 189 | 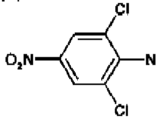 | -CH₃ | -H | -CH₃ | 448 |
| 190 | 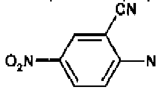 | -CH₃ | -H | -CH₃ | 532 |
| 191 | 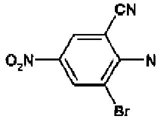 | -CH₃ | -H | -CH₃ | 541 |
| 192 | 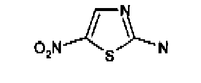 | -CH₃ | -H | -CH₃ | 579 |
| 193 | 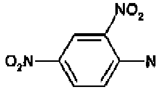 | -CH₃ | -H | -CH₃ | 525 |
| 194 | 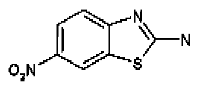 | -CH₃ | -H | -CH₃ | 541 |
| 195 | 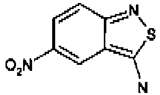 | -CH₃ | -H | -CH₃ | 599 |
| 196 | 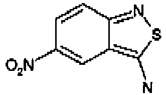 | -H | -H | -CH₃ | 588 |

## Claims

1. Dyestuff of the formula (Ia), (Ib), (Ic), (Id), (Ie) or (If) 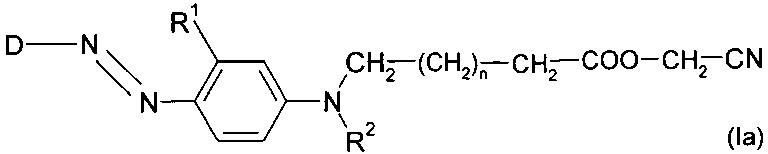 wherein
D is a group of the formulae (IIa), (IIb), (IIc), (IId) or (IIe); 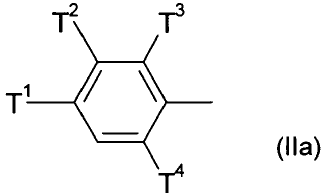 wherein
T¹, T² and T³ are, independently, hydrogen, halogen or nitro;
T⁴ is hydrogen, halogen, cyano or nitro;
wherein at least one of T¹, T², T³ and T⁴ is not hydrogen; 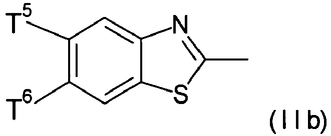 wherein
T⁵ is hydrogen or halogen; and
T⁶ is hydrogen -SO₂CH₃, -SCN or nitro;
wherein at least one of T⁵ and T⁶ is not hydrogen; 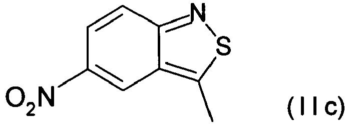 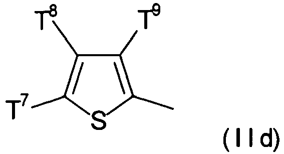 wherein
T⁷ is nitro, -CHO or a group of the formula 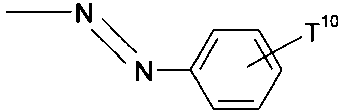
wherein T¹⁰ is -H, halogen, nitro and cyano;
T⁸ is hydrogen or halogen; and
T⁹ is nitro, cyano, -COCH₃ or -COOT¹⁰, wherein T¹⁰ is (C₁-C₄)-alkyl; 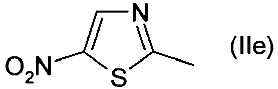
R¹ is (C₁-C₄)-alkyl;
R² is unsubstituted (C₁-C₆)-alkyl, benzyl or phenylethyl; and
n is 0, 1 or 2; or 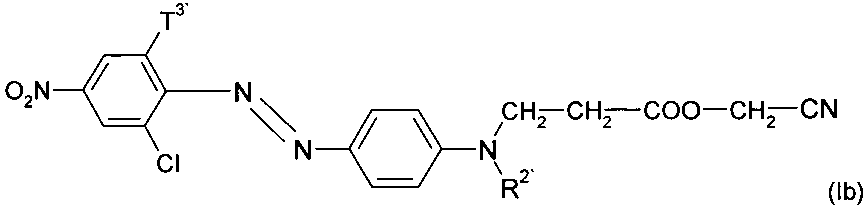 wherein
T^{3'} is bromo or chloro; and
R^{2'} is unsubstituted (C₁-C₆)-alkyl, substituted (C₁-C₆)-alkyl, benzyl or phenylethyl; or 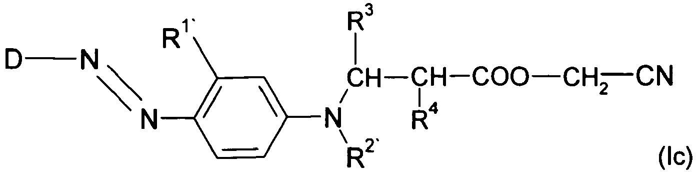
wherein
D is a group of the formulae (IIa), (IIb), (IIc), (IId) or (IIe) as herein above defined,
R¹ is hydrogen, (C₁-C₄)-alkyl or -NCOR⁶, where R⁶ is (C₁-C₄)-alkyl or phenyl;
R² is as herein above defined; and
R³ is hydrogen and R⁴ is methyl or R³ is methyl and R⁴ is hydrogen; or 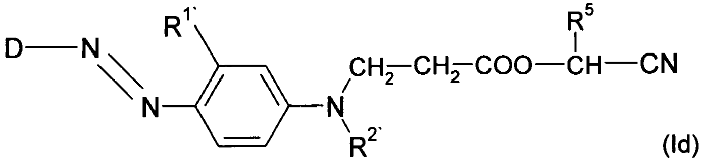
wherein
D is a group of the formulae (IIa), (IIb), (IIc), (IId) or (IIe) as herein above defined,
R^{1'} is as herein above defined;
R^{2'} is as herein above defined; and
R⁵ is methyl or phenyl; or 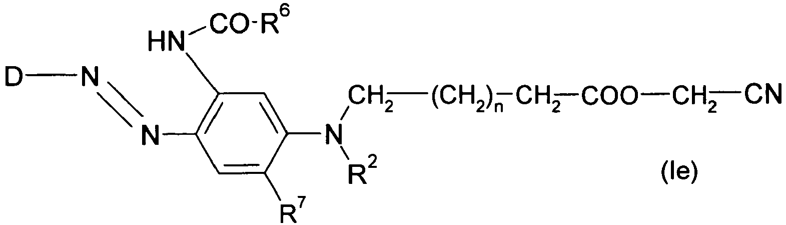
wherein
D is a group of the formulae (IIa), (IIb), (IIc), (IId) or (IIe) as herein above defined,
R² is as defined above;
R⁶ is (C₁-C₄)-alkyl or phenyl;
R⁷ is chloro, methoxy or ethoxy; and
n is 0, 1 or 2; or 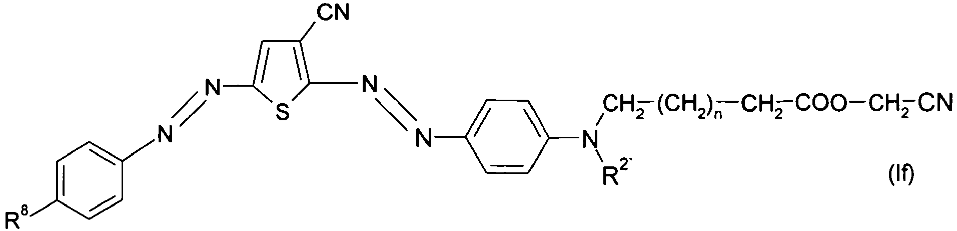
wherein
R^{2'} is as herein above defined;
R⁸ is nitro; and
n is 0, 1 or 2,
with the proviso that R² is unsubstituted (C₁-C₆)-alkyl if R¹ is methyl and n=0.

2. Dyestuff of the formula (Ia) according to claim 1, wherein R² is unsubstituted (C₁-C₆)-alkyl.

3. Dyestuff of the formula (Ia) according to claim 1, wherein R¹ is methyl, R² is ethyl and n=0.

4. Dyestuff of the formula (Ie) according to claim 1, wherein R^{2"} is unsubstituted (C₁-C₆)-alkyl.

5. Process for the preparation of a dyestuff as claimed in one or more of claims 1 to 4, which comprises diazotisation of an amine of the formula III
D-NH₂ (III)
wherein D is defined as given in the preceding claims, and coupling onto a compound of the formula IV 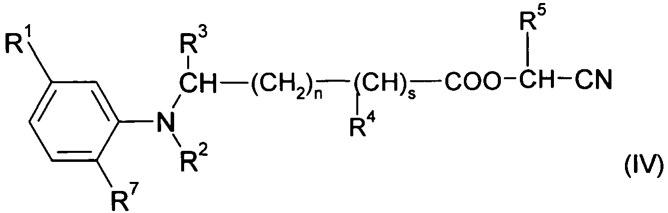 wherein R¹, R², R³, R⁴, R⁵ and R⁷ are defined as given in the preceding claims.

6. The use of a dyestuff as claimed in one or more of claims 1 to 4 for dyeing and printing of synthetic textile material and fibre blends thereof.

## Patentansprüche

1. Farbstoff der Formel (Ia), (Ib), (Ic), (Id), (Ie) oder (If) 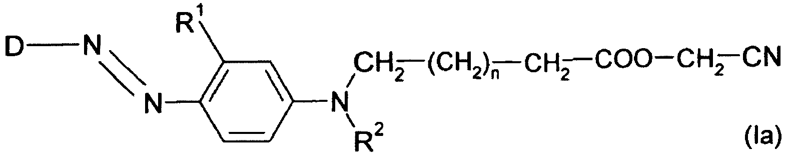 worin
D für eine Gruppe der Formel (IIa), (IIb), (IIc), (IId) oder (IIe) steht; 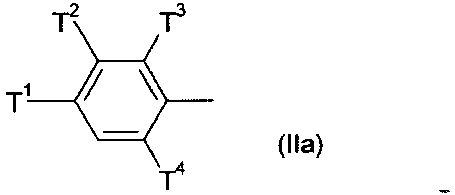 wobei
T¹, T² und T³ unabhängig voneinander für Wasserstoff, Halogen oder Nitro stehen;
T⁴ für Wasserstoff, Halogen, Cyano oder Nitro steht;
wobei mindestens eine der Variablen T¹, T², T³ und T⁴ nicht für Wasserstoff steht; 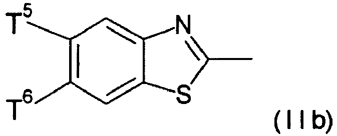
wobei
T⁵ für Wasserstoff oder Halogen steht und
T⁶ für Wasserstoff, -SO₂CH₃, -SCN oder Nitro steht;
wobei mindestens eine der Variablen T⁵ und T⁶ nicht für Wasserstoff steht; 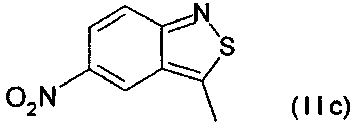 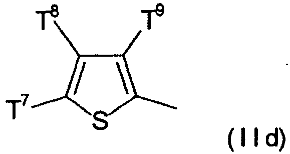 wobei
T⁷ für Nitro, -CHO oder eine Gruppe der Formel 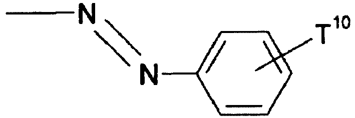 steht; wobei T¹⁰ für -H, Halogen, Nitro und Cyano steht;
- T⁸ für Wasserstoff oder Halogen steht und
T⁹ für Nitro, Cyano, -COCH₃ oder -COOT¹⁰ steht,
wobei T¹⁰ für (C₁-C₄)-Alkyl steht; 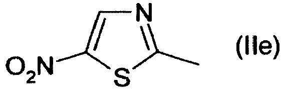
R¹ für (C₁-C₄)-Alkyl steht;
R² für unsubstituiertes (C₁-C₆)-Alkyl, Benzyl oder Phenylethyl steht und
n für 0, 1 oder 2 steht; oder 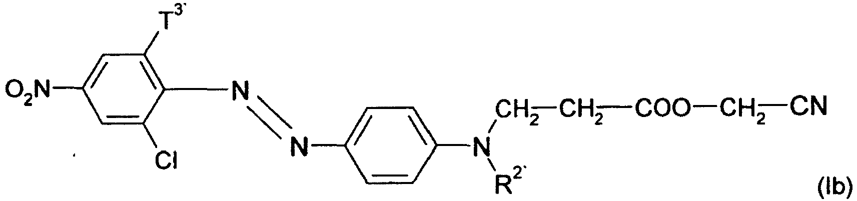 wobei
T^{3'} für Brom oder Chlor steht und
R^{2'} für unsubstituiertes (C₁-C₆)-Alkyl, substituiertes (C₁-C₆)-Alkyl, Benzyl oder Phenylethyl steht; oder 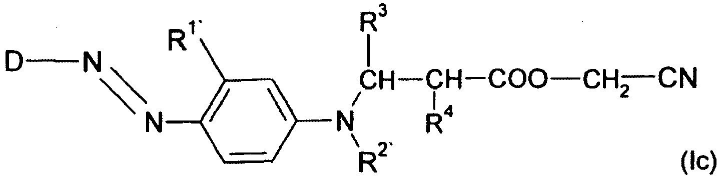 worin
D für eine Gruppe der Formel (IIa), (IIb), (IIc), (IId) oder (IIe) gemäß obiger Definition steht,
R^{1'} für Wasserstoff, (C₁-C₄)-Alkyl oder -NCOR⁶ steht, wobei R⁶ für (C₁-C₄)-Alkyl oder Phenyl steht;
R^{2'} wie oben definiert ist und
R³ für Wasserstoff steht und R⁴ für Methyl steht oder R³ für Methyl steht und R⁴ für Wasserstoff steht; oder 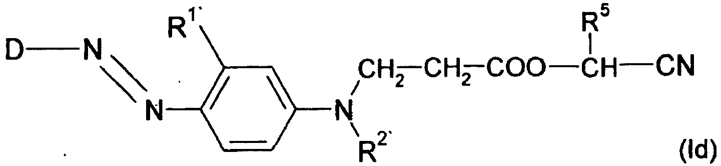 worin
D für eine Gruppe der Formel (IIa), (IIb), (IIc), (IId) oder (IIe) gemäß obiger Definition steht,
R^{1'} wie oben definiert ist;
R^{2'} wie oben definiert ist und
R⁵ für Methyl oder Phenyl steht; oder 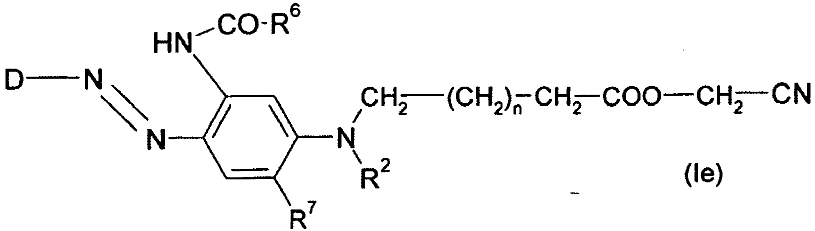 worin
D für eine Gruppe der Formel (IIa), (IIb), (IIc), (IId) oder (IIe) gemäß obiger Definition steht,
R² wie oben definiert ist;
R⁶ für (C₁-C₄)-Alkyl oder Phenyl steht;
R⁷ Chlor, Methoxy oder Ethoxy steht und
n für 0, 1 oder 2 steht; oder 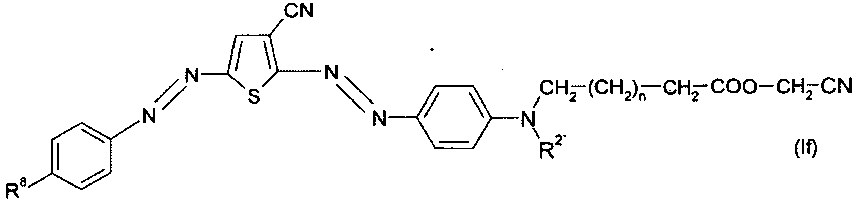
worin
R^{2'} wie oben definiert ist;
R⁸ für Nitro steht und
n für 0, 1 oder 2 steht,
mit der Maßgabe, dass R² für unsubstituiertes (C₁-C₆)-Alkyl steht, wenn R¹ für Methyl steht und n = 0.

2. Farbstoff der Formel (Ia) nach Anspruch 1, wobei R² für unsubstituiertes (C₁-C₆)-Alkyl steht.

3. Farbstoff der Formel (Ia) nach Anspruch 1, wobei R¹ für Methyl steht, R² für Ethyl steht und n = 0.

4. Farbstoff der Formel (Ie) nach Anspruch 1, wobei R^{2"} für unsubstituiertes (C₁-C₆)-Alkyl steht.

5. Verfahren zur Herstellung eines Farbstoffs nach einem oder mehreren der Ansprüche 1 bis 4, bei dem man ein Amin der Formel III
D-NH₂ (III)
worin D die in den vorhergehenden Ansprüchen angegebene Bedeutung besitzt,
diazotiert und auf eine Verbindung der Formel (IV) 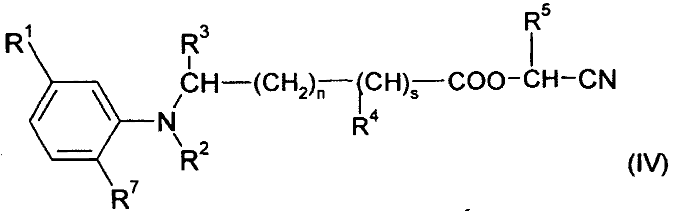 worin R¹, R², R³, R⁴, R⁵ und R⁷ die in den vorhergehenden Ansprüchen angegebene Bedeutung besitzen, kuppelt.

6. Verwendung eines Farbstoffs gemäß einem oder mehreren der Ansprüche 1 bis 4 zum Färben und Bedrucken von synthetischem Textilmaterial und Fasergemischen daraus.

## Revendications

1. Colorant selon la formule (Ia), (Ib), (Ic), (Id), (Ie) ou (If) 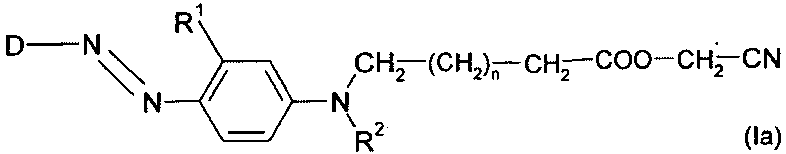 dans laquelle :
D est un groupe selon les formules (IIa), (IIb), (IIc), (IId) ou (IIe) ; 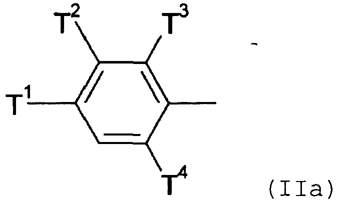 dans laquelle :
T¹, T² et T³ sont, indépendamment, un atome d'hydrogène, un atome d'halogène ou un groupe nitro ;
T⁴ est un atome d'hydrogène, un atome d'halogène, un groupe cyano ou un groupe nitro ;
au moins l'un de T¹, T², T³ et T⁴ n'étant pas un atome d'hydrogène ; 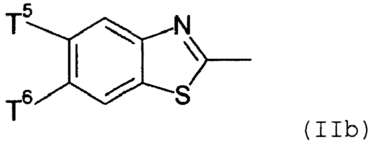
dans laquelle :
T⁵ est un atome d'hydrogène ou un atome d'halogène ; et
T⁶ est un atome d'hydrogène ou un groupe -SO₂CH₃, -SCN ou nitro ;
au moins l'un de T⁵ et T⁶ n'étant pas un atome d'hydrogène ; 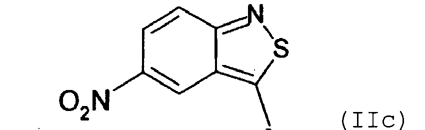 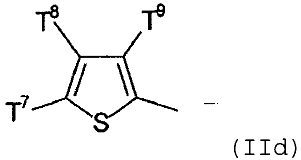
dans laquelle :
T⁷ est un groupe nitro, -CHO, ou un groupe selon la formule 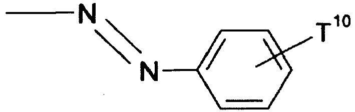
dans laquelle :
T¹⁰ est -H, un atome d'halogène, un groupe nitro ou un groupe cyano ;
T⁸ est un atome d'hydrogène ou un atome d'halogène ; et
T⁹ est un groupe nitro, cyano, -COCH₃ ou -COOT¹⁰, dans-lequel T¹⁰ est un groupe alkyle C₁-C₄ ; 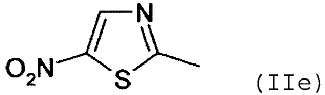
R¹ est un groupe alkyle C₁-C₄ ;
R² est un groupe alkyle C₁-C₆ non substitué, un groupe benzyle ou un groupe phényléthyle ; et
n vaut 0, 1 ou 2 ; ou 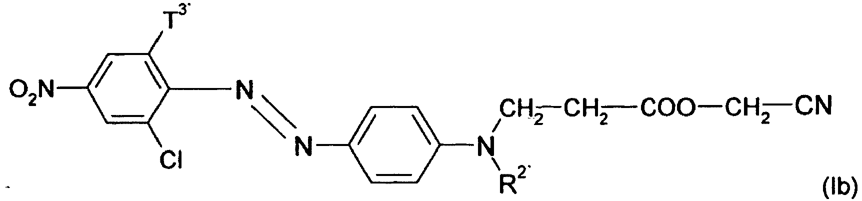 dans laquelle :
T^{3'} est un groupe bromo ou chloro ; et
R^{2'} est un groupe alkyle C₁-C₆ non substitué, un groupe alkyle C₁-C₆ substitué, un groupe benzyle ou un groupe phényléthyle ; ou 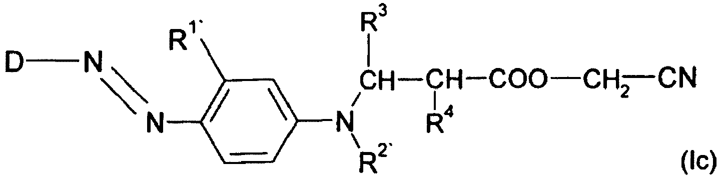 dans laquelle :
D est un groupe selon les formules (IIa), (IIb), (IIc), (IId) ou (IIe) telles que définies ci-dessus,
R^{1'} est un atome d'hydrogène, un groupe alkyle C₁-C₄ ou un groupe -NCOR⁶, dans lequel R⁶ est un groupe alkyle C₁-C₄ ou un groupe phényle ;
R^{2'} est tel que défini ci-dessus ; et
R³ est un atome d'hydrogène et R⁴ est un groupe méthyle ou R³ est un groupe méthyle et R⁴ est un atome d'hydrogène ; ou 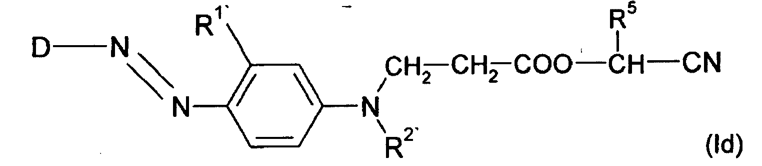 dans laquelle :
D est un groupe selon les formules (IIa), (IIb), (IIc), (IId) ou (IIe) telles que définies ci-dessus,
R^{1'} est tel que défini ci-dessus ;
R^{2'} est tel que défini ci-dessus ; et
R⁵ est un groupe méthyle ou phényle ; ou 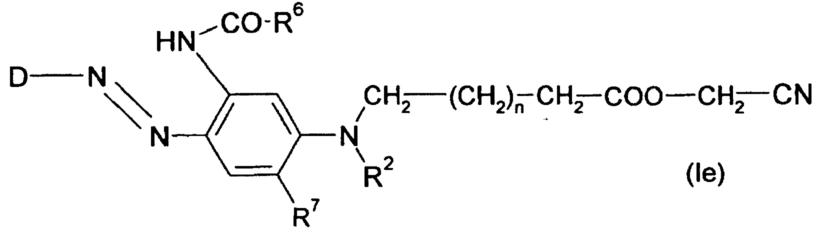 dans laquelle :
D est un groupe selon les formules (IIa), (IIb), (IIc), (IId) ou (IIe) telles que définies ci-dessus,
R² est tel que défini ci-dessus ;
R⁶ est un groupe alkyle C₁-C₄ ou un groupe phényle ;
R⁷ est un groupe chloro, méthoxy ou éthoxy ; et
n vaut 0, 1 ou 2 ; ou 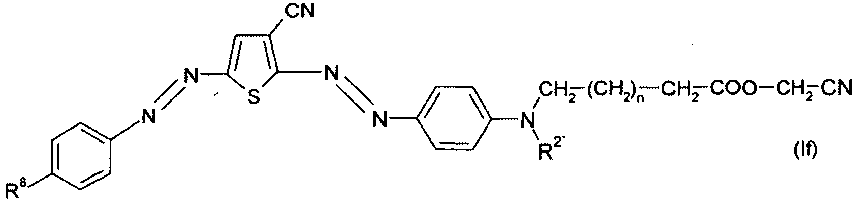 dans laquelle :
R^{2'} est tel que défini ci-dessus ;
R⁸ est un groupe nitro ; et
n vaut 0, 1 ou 2,
sous réserve que R² soit un groupe alkyle C₁-C₆ non substitué si R¹ est un groupe méthyle et n vaut 0.

2. Colorant selon la formule (Ia) selon la revendication 1, dans laquelle R² est un groupe alkyle C₁-C₆ non substitué.

3. Colorant selon la formule (Ia) selon la revendication 1, dans laquelle R¹ est un groupe méthyle, R² est un groupe éthyle et n vaut 0.

4. Colorant selon la formule (Ie) selon la revendication 1, dans laquelle R^{2''} est un groupe alkyle C₁-C₆ non substitué.

5. Procédé de préparation d'un colorant selon une ou plusieurs des revendications 1 à 4, comprenant la diazotisation d'une amine selon la formule III
D-NH₂ (III)
dans laquelle D est défini selon les revendications précédentes, et le couplage à un composé selon la formule IV 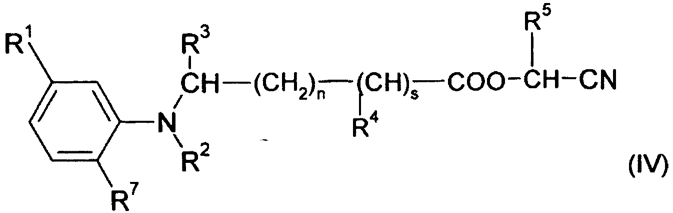 dans laquelle R¹, R², R³, R⁴, R⁵ et R⁷ sont définis selon les revendications précédentes.

6. Utilisation d'un colorant selon une ou plusieurs des revendications 1 à 4 pour la teinture et l'impression d'un matériau textile synthétique et de mélanges fibreux de celui-ci.
